# EUROPEAN PATENT APPLICATION

(11) **EP 4 571 413 A1**
(43) Date of publication of application: **18.06.2025**
(21) Application number: 24198424.4
(22) Date of filing: 04.09.2024
(51) Int. Cl.: G02F 1/29, G02B 27/00, H04B 10/112

(54) **HYBRID OPTICAL PHASED ARRAY PHASE MODULATION**

(30) Priority: 13.12.2023 US 202363609398 P; 23.07.2024 US 202418781528
(71) Applicant: Taara Connect, Inc., Sunnyvale, CA 94089 (US)
(72) Inventor: BILODEAU, Simon, Los Altos (US); CIERNY, Ondrej, San Francisco (US)
(74) Representative: Derry, Paul Stefan

(57) **Abstract**

Aspects of the disclosure provide an optical communications terminal which may include an optical phased array (OPA). The OPA may include a plurality of emitters; and a set of phase shifters which may include a first phase shifter and a second phase shifter. The first and second phase shifters may be arranged such that an incoming signal is modulated by the first phase shifter with a first update rate and a first tuning range and thereafter further modulated by the second phase shifter with a second update rate and a second tuning range. The first update rate may be different from the second update rate and the first tuning range may be different than the second tuning range. The first phase shifter may be associated with an emitter of the plurality of emitters and the second phase shifter may be associated with two emitters of the plurality of emitters.

## Description

### CROSS-REFERENCE TO RELATED APPLICATIONS

The present application claims the benefit of the filing date of U.S. Provisional Application No. 63/609,398, filed December 13, 2023, the entire disclosure of which is incorporated by reference herein.

### BACKGROUND

Wireless optical communication enables high-throughput and long-range communication, in part due to high gain offered by the narrow angular width of the transmitted beam. However, the narrow beam also requires that it must be accurately and actively pointed in order to remain aligned to an aperture of a communications terminal at the remote end. This pointing may be accomplished by small mirrors (e.g., MEMS or voice-coil based fast-steering mirror mechanisms) that are actuated to steer the beam. In other implementations, solid state steering of beams with no moving parts is used to steer the beam, which provides cost, lifetime and performance advantages. Optical Phased Arrays (OPAs) are a critical technology component, with added benefits of adaptive-optics, point-to-multipoint support, and mesh network topologies. Each active element in the OPA requires solid state phase shifting capability.

### BRIEF SUMMARY

Aspects of the disclosure provide an optical communications terminal. The optical communications terminal comprising an optical phased array (OPA). The OPA comprising: a plurality of emitters; and a set of phase shifters including a first phase shifter and a second phase shifter and wherein the first phase shifter and the second phase shifter are arranged such that an incoming signal is modulated by the first phase shifter with a first update rate and a first tuning range and thereafter further modulated by the second phase shifter with a second update rate and a second tuning range, wherein the first update rate is different from the second update rate and the first tuning range is different than the second tuning range, wherein the first phase shifter is associated with at least one emitter of the plurality of emitters and the second phase shifter is associated with at least two emitters of the plurality of emitters.

In one example, the first phase shifter and the second phase shifter are arranged such that an outgoing signal is modulated by the second phase shifter with the second update rate and the second tuning range and thereafter further modulated by the first phase shifter with the first update rate and first tuning range.

In another example, the second phase shifter is associated with at least four emitters of the plurality of emitters.

In a further example, the set of phase shifters further includes a third phase shifter with a third update rate and third tuning range. Additionally, the second tuning range may be the same as the third tuning range. Additionally or alternatively the second update rate is the same as the third update rate. Additionally or alternatively, the first phase shifter, the second phase shifter, and the third phase shifter may be arranged such that an outgoing signal may be modulated by the third phase shifter with the third update rate and the third tuning range, then may be further modulated by the second phase shifter with the second update rate and the second tuning range, and thereafter may be further modulated by the first phase shifter with the first update rate and first tuning range. Additionally or alternatively, the first phase shifter, the second phase shifter, and third phase shifter may be arranged such that an incoming signal may be modulated by the first phase shifter with a first update rate and a first tuning range, then may be further modulated by the second phase shifter with a second update rate and a second tuning range, and thereafter may be further modulated by the third phase shifter with the third update rate and the third tuning range.

In another example, the set of phase shifters is a plurality of sets of phase shifters each including a first phase shifter associated with at least one respective emitter of the second phase shifter associated with at least two respective emitters of the plurality of emitters. Additionally, the first phase shifters of the plurality of sets of phase shifters may be arranged in a first layer and the second phase shifters of the plurality of sets of phase shifters may be arranged in a second layer.

In a further example, the first tuning range is greater than 2π and the first update rate is on the order of 1 kHz.

In an additional example, the second tuning range is less than π and the second update rate is on the order of 10 kHz or 100 kHz.

In another example, the first phase shifter is a thermo-optic phase shifter.

In a further example the second phase shifter is a carrier type phase shifter.

Another aspect of the disclosure provides a method of modulating signals at an optical phased array (OPA) of an optical communications terminal. The method comprising modulating, at a first phase shifter of an OPA, a signal at a first update rate and in a first tuning range; and modulating, at a second phase shifter of the OPA, the signal at a second update rate and a second tuning range, wherein the first update rate is different from the second update rate and the first tuning range is different than the second tuning range, wherein the first phase shifter is associated with at least one emitter of a plurality of emitters and the second phase shifter is associated with at least two emitters of the plurality of emitters.

In one example, the modulation at the first phase shifter of the OPA is conducted prior to the modulation at the second phase shifter of the OPA when the signal is an incoming signal.

In another example, the modulation at the second phase shifter of the OPA is conducted prior to the modulation at the first phase shifter of the OPA when the signal is an outgoing signal.

In a further example, the method further includes modulating, at a third phase shifter of the OPA, the signal at a third update rate and in a third tuning range. Additionally, the modulation at the third phase shifter may be conducted following the modulation at the first and second phase shifters of the OPA when the signal is an incoming signal. Additionally or alternatively, the second update rate may be the same as the third update rate.

### BRIEF DESCRIPTION OF DRAWINGS

FIGURE 1 is a block diagram 100 of a first communications terminal and a second communications terminal in accordance with aspects of the disclosure.
FIGURE 2 is a pictorial diagram 200 of an example system architecture for the first communication device of FIGURE 1 in accordance with aspects of the disclosure.
FIGURE 3 represents features of an OPA architecture represented as an example OPA chip in accordance with aspects of the disclosure.
FIGURE 4 is a pictorial diagram of a network in accordance with aspects of the disclosure.
FIGURE 5 is a block diagram in accordance with aspects of the disclosure.
FIGURE 6 is a pictorial diagram in accordance with aspects of the disclosure.
FIGURE 7 is a pictorial diagram in accordance with aspects of the disclosure.
FIGURE 8A is a block diagram in accordance with aspects of the disclosure.
FIGURE 8B is a block diagram in accordance with aspects of the disclosure.
FIGURE 9A is a block diagram in accordance with aspects of the disclosure.
FIGURE 9B is a block diagram in accordance with aspects of the disclosure.
FIGURE 10 is a flow diagram in accordance with aspects of the disclosure.

### DETAILED DESCRIPTION

### Overview

The technology relates to an optical phased array (OPA) of phase shifters of an optical communications terminal configured to utilize a hybrid phase modulation approach. The optical communications terminal may be configured for bi-directional communications. The OPA may be included in a photonic integrated circuit (PIC). The hybrid phase modulation approach may allow for differing modulation or tuning ranges and/or update rates for transmitted (outgoing) and received (incoming) signals (e.g., optical communications beams) at different phase shifters of an OPA. In some instances, different types of phase shifters may be used for the differing tuning ranges and/or update rates.

Generally, phase shifters of OPAs include same-type phase shifters with the same update rates and tuning ranges. Such approaches may require complex, large, and expensive structures that lack scalability. For example, phase shifters configured to cover large tuning ranges tend to be larger in size and require large suites of auxiliary equipment. This in turn may severely limit space for additional components.

To address this, as noted above, an OPA that utilizes a hybrid phase modulation approach which results in phase shifters with differing tuning ranges and/or update rates may be used. In this regard, the OPA may leverage the advantages of different tuning techniques while minimizing drawbacks of such techniques. For instance, thermal tuning has the drawback of large power dissipation and low update speed, whereas carrier-based tuning has the drawback of tuning-dependent optical loss and low tuning efficiency. In this regard, thermal tuning may be used in conjunction with carrier-based. Another significant advantage of this architecture is the possibility to share phase shifters with different tuning techniques amongst multiple antennas or emitters. The sharing of the phase shifters may reduce system complexity and free area on the PIC for other components, increasing scalability.

### Example Systems

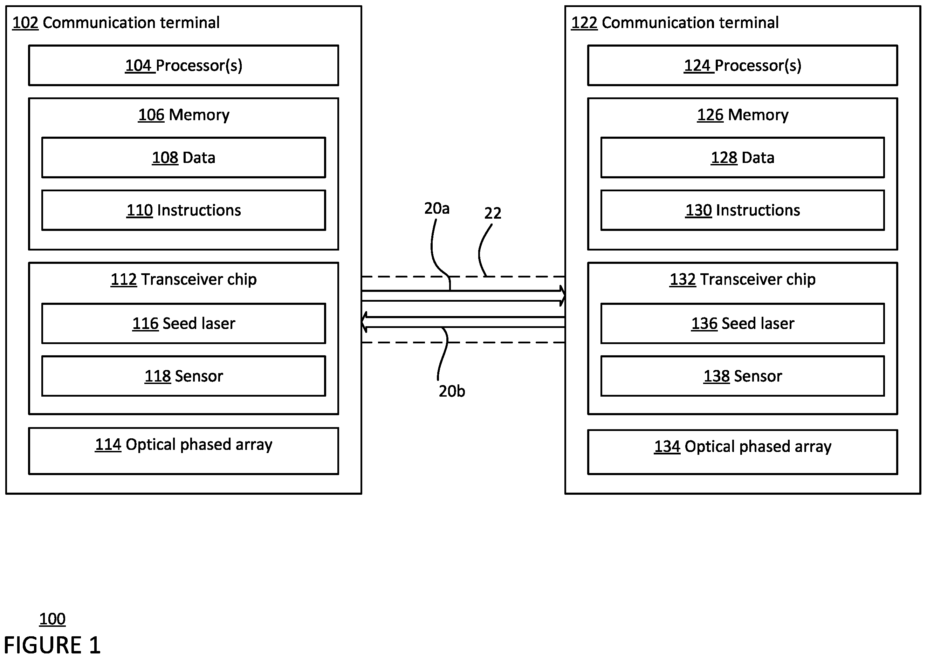

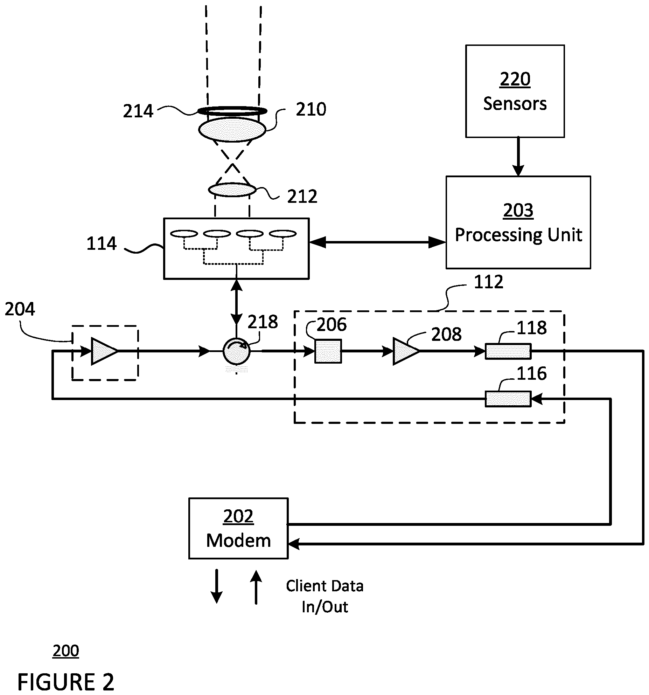

FIGURE 1 is a block diagram 100 of a first communications terminal configured to form one or more links with a second communications terminal, for instance as part of a system such as a free-space optical communication (FSOC) system. FIGURE 2 is a pictorial diagram 200 of an example communications terminal, such as the first communications terminal of FIGURE 1. For example, a first communications terminal 102 includes one or more processors 104, a memory 106, a transceiver photonic integrated chip 112, and an optical phased array (OPA) architecture 114. In some implementations, the first communications terminal 102 may include more than one transceiver chip and/or more than one OPA architecture (e.g., more than one OPA chip).

The one or more processors 104 may be any conventional processors, such as commercially available CPUs. Alternatively, the one or more processors may be a dedicated device such as an application specific integrated circuit (ASIC) or another hardware-based processor, such as a field programmable gate array (FPGA). Although FIGURE 1 functionally illustrates the one or more processors 104 and memory 106 as being within the same block, such as in a modem 202 for digital signal processing shown in FIGURE 2, the one or more processors 104 and memory 106 may actually comprise multiple processors and memories that may or may not be stored within the same physical housing, such as in both the modem 202 and a separate processing unit 203. Accordingly, references to a processor or computer will be understood to include references to a collection of processors or computers or memories that may or may not operate in parallel.

Memory 106 may store information accessible by the one or more processors 104, including data 108, and instructions 110, that may be executed by the one or more processors 104. The memory may be of any type capable of storing information accessible by the processor, including a computer-readable medium such as a hard-drive, memory card, ROM, RAM, DVD or other optical disks, as well as other write-capable and read-only memories. The system and method may include different combinations of the foregoing, whereby different portions of the data 108 and instructions 110 are stored on different types of media. In the memory of each communications terminal, such as memory 106, calibration information, such as one or more offsets determined for tracking a signal, may be stored.

Data 108 may be retrieved, stored or modified by one or more processors 104 in accordance with the instructions 110. For instance, although the system and method are not limited by any particular data structure, the data 108 may be stored in computer registers, in a relational database as a table having a plurality of different fields and records, XML documents or flat files. The data 108 may also be formatted in any computer-readable format such as, but not limited to, binary values or Unicode. By further way of example only, image data may be stored as bitmaps including of grids of pixels that are stored in accordance with formats that are compressed or uncompressed, lossless (e.g., BMP) or lossy (e.g., JPEG), and bitmap or vector-based (e.g., SVG), as well as computer instructions for drawing graphics. The data 108 may comprise any information sufficient to identify the relevant information, such as numbers, descriptive text, proprietary codes, references to data stored in other areas of the same memory or different memories (including other network locations) or information that is used by a function to calculate the relevant data.

The instructions 110 may be any set of instructions to be executed directly (such as machine code) or indirectly (such as scripts) by the one or more processors 104. For example, the instructions 110 may be stored as computer code on the computer-readable medium. In that regard, the terms "instructions" and "programs" may be used interchangeably herein. The instructions 110 may be stored in object code format for direct processing by the one or more processors 104, or in any other computer language including scripts or collections of independent source code modules that are interpreted on demand or compiled in advance. Functions, methods and routines of the instructions 110 are explained in more detail below.

The one or more processors 104 may be in communication with the transceiver chip 112. As shown in FIGURE 2, the one or more processors in the modem 202 may be in communication with the transceiver chip 112, being configured to receive and process incoming optical signals and to transmit optical signals. The transceiver chip 112 may include one or more transmitter components and one or more receiver components. The one or more processors 104 may therefore be configured to transmit, via the transmitter components, data in a signal, and also may be configured to receive, via the receiver components, communications and data in a signal. The received signal may be processed by the one or more processors 104 to extract the communications and data.

The transmitter components may include at minimum a light source, such as seed laser 116. Other transmitter components may include an amplifier, such as a high-power semiconductor optical amplifier 204. In some implementations, the amplifier is on a separate photonics chip. The seed laser 116 may be a distributed feedback laser (DFB), a laser diode, a fiber laser, or a solid-state laser. The light output of the seed laser 116, or optical signal, may be controlled by a current, or electrical signal, applied directly to the seed laser, such as from a modulator that modulates a received electrical signal. Light transmitted from the seed laser 116 is received by the OPA architecture 114.

The receiver components may include at minimum a sensor 118, such as a photodiode. The sensor may convert a received signal (e.g., light or optical communications beam), into an electrical signal that can be processed by the one or more processors. Other receiver components may include an attenuator, such as a variable optical attenuator 206, an amplifier, such as a semiconductor optical amplifier 208, or a filter.

The one or more processors 104 may be in communication with the OPA architecture 114. The OPA architecture may include a micro-lens array, an emitter (e.g., antenna, general coupler, coupling device, etc.) associated with each micro-lens in the array, a plurality of phase shifters, and waveguides that connect the components in the OPA. The OPA architecture may be positioned on a single chip, an OPA chip. The waveguides progressively merge between a plurality of emitters and an edge coupler that connect to other transmitter and/or receiver components. In this regard, the waveguides may direct light between photodetectors or fiber outside of the OPA architecture, the phase shifters the waveguide combiners, the emitters and any additional component within the OPA. In particular, the waveguide configuration may combine two waveguides at each stage, which means the number of waveguides is reduced by a factor of two at every successive stage closer to the edge coupler. The point of combination may be a node, and a combiner may be at each node. The combiner may be a 2x2 multimode interference (MMI) or directional coupler.

The OPA architecture 114 may receive light from the transmitter components and outputs the light as a coherent communications beam to be received by a remote communications terminal, such as second communications terminal 122. The OPA architecture 114 may also receive light from free space, such as a communications beam from second communications terminal 122, and provides such received light to the receiver components. The OPA architecture may provide the necessary photonic processing to combine an incoming optical communications beam into a single-mode waveguide that directs the beam towards the transceiver chip 112. In some implementations, the OPA architecture may also generate and provide an angle of arrival estimate to the one or more processors 104, such as those in processing unit 203.

The first communications terminal 102 may include additional components to support functions of the communications terminal. For example, the first communications terminal may include one or more lenses and/or mirrors that form a telescope. The telescope may receive collimated light and output collimated light. The telescope may include an objective portion, an eyepiece portion, and a relay portion. As shown in FIGURE 2, the first communications terminal may include a telescope including an objective lens 210, an eyepiece lens 212, and an aperture 214 (or opening) through which light may enter and exit the communications terminal. For ease of representation and understanding, the aperture 214 is depicted as distinct from the objective lens 210, though the objective lens 210 may be positioned within the aperture. The first communications terminal may include a circulator or wavelength splitter, such as a single mode circulator 218, that routes incoming signals (e.g., light) and outgoing signals (e.g., light) while keeping these signals on at least partially separate paths. The first communications terminal may include one or more sensors 220 for detecting measurements of environmental features and/or system components.

The first communications terminal 102 may include one or more steering mechanisms, such as one or more bias means for controlling one or more phase shifters, which may be part of the OPA architecture 114, and/or an actuated/steering mirror (not shown), such as a fast/fine pointing mirror. In some examples, the actuated mirror may be a MEMS 2-axis mirror, 2-axis voice coil mirror, or a piezoelectric 2-axis mirror. The one or more processors 104, such as those in the processing unit 203, may be configured to receive and process signals from the one or more sensors 220, the transceiver chip 112, and/or the OPA architecture 114 and to control the one or more steering mechanisms to adjust a pointing direction and/or wavefront shape. The first communications terminal also includes optical fibers, or waveguides, connecting optical components, creating a path between the seed laser 116 and OPA architecture 114 and a path between the OPA architecture 114 and the sensor 118.

Returning to FIGURE 1, the second communications terminal 122 may output the Tx signals as an optical communications beam 20b (e.g., light) pointed towards the first communications terminal 102, which receives the optical communications beam 20b (e.g., light) as corresponding Rx signals. In this regard, the second communications terminal 122 includes one or more processors, 124, a memory 126, a transceiver chip 132, and an OPA architecture 134. The one or more processors 124 may be similar to the one or more processors 104 described above.

Memory 126 may store information accessible by the one or more processors 124, including data 128 and instructions 130 that may be executed by processor 124. Memory 126, data 128, and instructions 130 may be configured similarly to memory 106, data 108, and instructions 110 described above. In addition, the transceiver chip 132 and the OPA architecture 134 of the second communications terminal 122 may be similar to the transceiver chip 112 and the OPA architecture 114. The transceiver chip 132 may include both transmitter components and receiver components. The transmitter components may include a light source, such as seed laser 136 configured similar to the seed laser 116. Other transmitter components may include an amplifier, such as a high-power semiconductor optical amplifier. The receiver components may include a sensor 138 configured similar to sensor 118. Other receiver components may include an attenuator, such as a variable optical attenuator, an amplifier, such as a semiconductor optical amplifier, or a filter. The OPA architecture 134 may include an OPA chip including a micro-lens array, a plurality of emitters, a plurality of phase shifters. Additional components for supporting functions of the second communications terminal 122 may be included similar to the additional components described above. The second communications terminal 122 may have a system architecture that is same or similar to the system architecture shown in FIGURE 2.

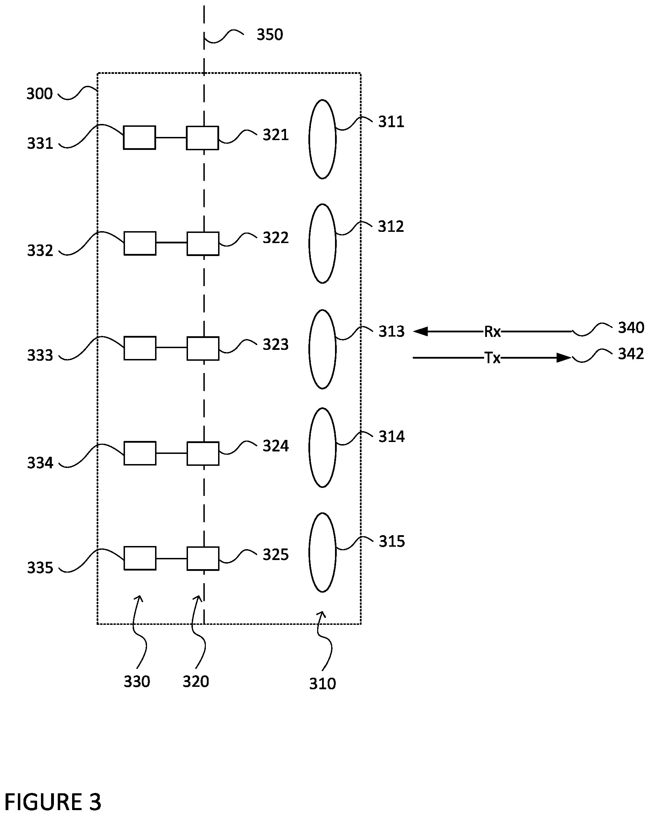

FIGURE 3 represent features of OPA architecture 114 represented as an example OPA chip 300 including representations of a micro-lens array 310, a plurality of emitters 320, and a plurality of phase shifters 330. For clarity and ease of understanding, additional waveguides and other features are not depicted. Arrows 340, 342 represent the general direction of Tx signals (transmitted optical communications beam) and Rx signals (received optical communications beam) as such signals pass or travel through the OPA chip 300.

The micro-lens array 310 may include a plurality of convex micro-lenses 311-315 that focus the Rx signals onto respective ones of the plurality emitters positioned at the focal points of the micro-lens array. In this regard, the dashed-line 350 represents the focal plane of the micro-lenses 311-315 of the micro-lens array 310. The micro-lens array 310 may be arranged in a grid pattern with a consistent pitch, or distance, between adjacent lenses. In other examples, the micro-lens array 310 may be in different arrangements having different numbers of rows and columns, different shapes, and/or different pitch (consistent or inconsistent) for different lenses.

Each micro-lens of the micro-lens array may be 10's to 100's of micrometers in diameter and height. In addition, each micro-lens of the micro-lens array may be manufactured by molding, printing, or etching a lens directly into a wafer of the OPA chip 300. Alternatively, the micro-lens array 310 may be molded as a separately fabricated micro-lens array. In this example, the micro-lens array 310 may be a rectangular or square plate of glass or silica a few mm (e.g., 10 mm or more or less) in length and width and 0.2 mm or more or less thick. Integrating the micro-lens array within the OPA chip 300 may allow for the reduction of the grating emitter size and an increase in the space between emitters. In this way, two-dimensional waveguide routing in the OPA architecture may better fit in a single layer optical phased array. In other instances, rather than a physical micro-lens array, the function of the micro-lens array may be replicated using an array of diffractive optical elements (DOE).

Each micro-lens of the micro-lens array may be associated with a respective emitter of the plurality of emitters 320. For example, each micro-lens may have an emitter from which Tx signals are received and to which the Rx signals are focused. As an example, micro-lens 311 is associated with emitter 321. Similarly, each micro-lens 312-315 also has a respective emitter 322-325. In this regard, for a given pitch (i.e., edge length of a micro-lens edge length) the micro-lens focal length may be optimized for best transmit and receive coupling to the underlying emitters. This arrangement may thus increase the effective fill factor of the Rx signals at the respective emitter, while also expanding the Tx signals received at the micro-lenses from the respective emitter before the Tx signals leave the OPA chip 300.

The plurality of emitters 320 may be configured to convert emissions from waveguides to free space and vice versa. The emitters may also generate a specific phase and intensity profile to further increase the effective fill factor of the Rx signals and improve the wavefront of the Tx signals. The phase and intensity profile may be determined using inverse design or other techniques in a manner that accounts for how transmitted signals will change as they propagate to and through the micro-lens array. The phase profile may be different from the flat profile of traditional grating emitters, and the intensity profile may be different from the gaussian intensity profile of traditional grating emitters. However, in some implementations, the emitters may be Gaussian field profile grating emitters.

The phase shifters 330 may allow for sensing and measuring Rx signals and the altering of Tx signals to improve signal strength optimally combining an input wavefront into a single waveguide or fiber. Each emitter may be associated with a phase shifter. As shown in FIGURE 3, each emitter may be connected to a respective phase shifter. As an example, the emitter 320 is associated with a phase shifter 330. The Rx signals received at the phase shifters 331-335 may be provided to receiver components including the sensor 118, and the Tx signals from the phase shifters 331-335 may be provided to the respective emitters of the plurality of emitters 320. The architecture for the plurality of phase shifters 330 may include at least one layer of phase shifters having at least one phase shifter connected to an emitter of the plurality of emitters 320. In some examples, the phase shifter architecture may include a plurality of layers of phase shifters, where phase shifters in a first layer may be connected in series with one or more phase shifters in a second layer.

A communication link 22 may be formed between the first communications terminal 102 and the second communications terminal 122 when the transceivers of the first and second communications terminals are aligned. The alignment can be determined using the optical communications beams 20a, 20b to determine when line-of-sight is established between the communications terminals 102, 122. Using the communication link 22, the one or more processors 104 can send communication signals using the optical communications beam 20a to the second communications terminal 122 through free space, and the one or more processors 124 can send communication signals using the optical communications beam 20b to the first communications terminal 102 through free space. The communication link 22 between the first and second communications terminals 102, 122 allows for the bi-directional transmission of data between the two devices. In particular, the communication link 22 in these examples may be free-space optical communications (FSOC) links. In other implementations, one or more of the communication links 22 may be radio-frequency communication links or other type of communication link capable of traveling through free space.

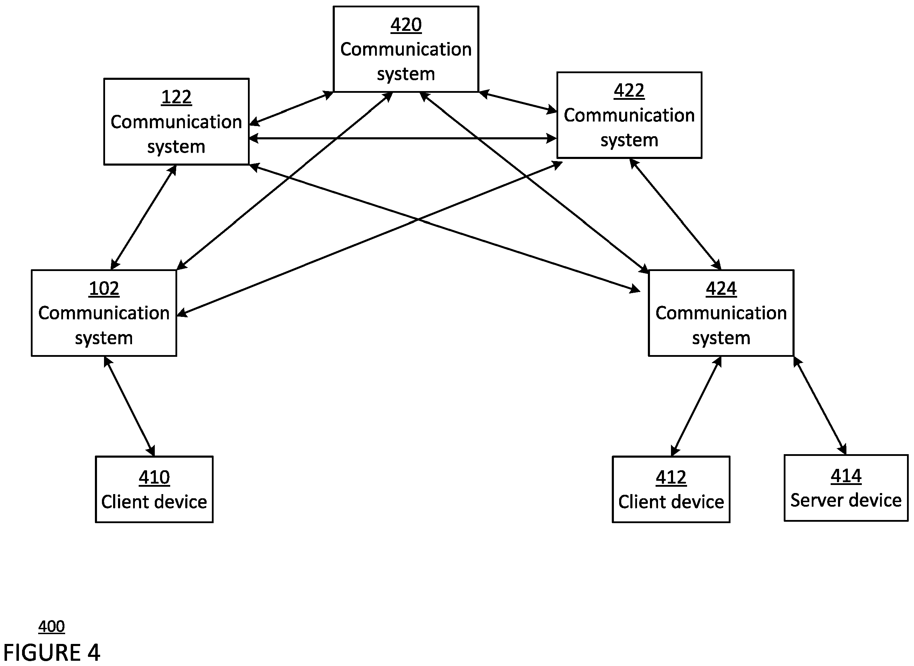

As shown in FIGURE 4, a plurality of communications terminals, such as the first communications terminal 102 and the second communications terminal 122, may be configured to form a plurality of communication links (illustrated as arrows) between a plurality of communications terminals, thereby forming a network 400. The network 400 may include client devices 410 and 412, server device 414, and communications terminals 102, 122, 420, 422, and 424. Each of the client devices 410, 412, server device 414, and communications terminals 420, 422, and 424 may include one or more processors, a memory, a transceiver chip, and an OPA architecture (e.g., OPA chip or chips) similar to those described above. Using the transmitter and the receiver, each communications terminal in network 400 may form at least one communication link with another communications terminal, as shown by the arrows. The communication links may be for optical frequencies, radio frequencies, other frequencies, or a combination of different frequency bands. In FIGURE 4, the first communications terminal 102 is shown having communication links with client device 410 and communications terminals 122, 420, and 422. The second communications terminal 122 is shown having communication links with communications terminals 102, 420, 422, and 424.

The network 400 as shown in FIGURE 4 is illustrative only, and in some implementations the network 400 may include additional or different communications terminals. The network 400 may be a terrestrial network where the plurality of communications terminals is on a plurality of ground communications terminals. In other implementations, the network 400 may include one or more high-altitude platforms (HAPs), which may be balloons, blimps or other dirigibles, airplanes, unmanned aerial vehicles (UAVs), satellites, or any other form of high-altitude platform, or other types of moveable or stationary communications terminals. In some implementations, the network 400 may serve as an access network for client devices such as cellular phones, laptop computers, desktop computers, wearable devices, or tablet computers. The network 400 also may be connected to a larger network, such as the Internet, and may be configured to provide a client device with access to resources stored on or provided through the larger computer network.

As noted above, different phase shifters of the OPA of an optical communications terminal (e.g., first optical communications terminal 102, second optical communications terminal 122) may modulate transmitted (outgoing) and received (incoming) signals at differing update rates and/or differing tuning ranges. The OPA may be included in a PIC with a plurality of features, such as, for example, a micro-lens array, an emitter associated with each micro-lens, a plurality of phase shifters including a set of phase shifters for each micro-lens, and waveguides that connect the components in the OPA architecture. The set of phase shifters may include the differing types of phase shifters.

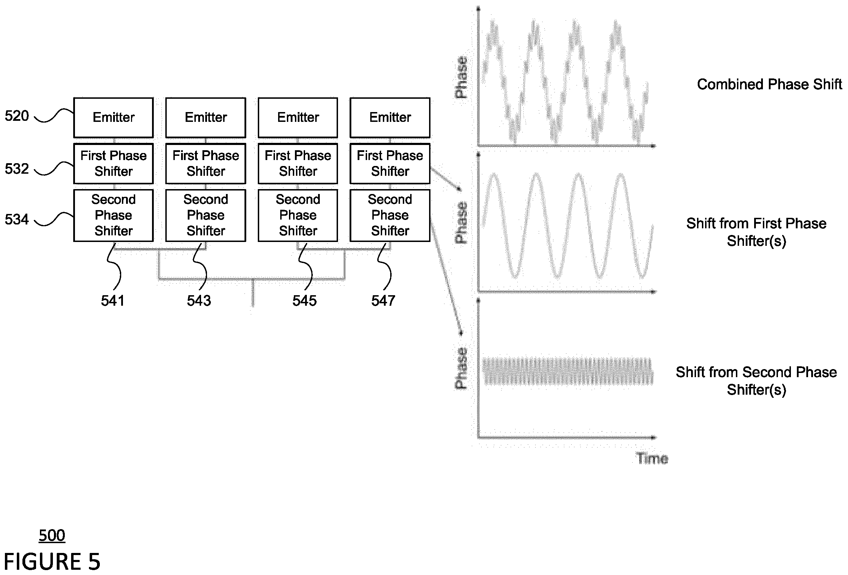

FIGURE 5 illustrates an example 500 where each emitter 520 (e.g., antenna, general coupler, coupling device, etc.) is associated with a set of phase shifters 541, 543, 545, 547. FIGURE 5 illustrates sets of phase shifters 541, 543, 545, 547. Each set of phase shifters includes 541, 543, 545, 547 a first phase shifter 532 (e.g., high swing, slow phase shifter) and a second phase shifter 534 (e.g., low swing, fast phase shifter). In such an example, when receiving a signal at the emitter 520, an incoming signal may be modulated by the first phase shifter 532, then the signal may be further modulated by the second phase shifter 534. When transmitting a signal, an outgoing signal may be modulated by the second phase shifter 534. Thereafter, the signal may be further modulated by the first phase shifter 532 prior to being transmitted by the emitter 520.

The first phase shifter 532 may be utilized for larger scale phase modulations of the signal while the second phase shifter 534 shifter may be utilized for smaller scale phase modulations. In this regard, the first phase shifter 532 may have a first phase tuning range and the second phase shifter 534 may have a second phase tuning range. The first phase tuning range may be larger than the second phase tuning range. For example, the first tuning range may be greater than 2π and the second tuning range may be less than or significantly less than π. Additionally, the first phase shifter 532 may have a first update rate and the second phase shifter 534 may have a second update rate. The first update rate may be less than the second update rate. For example, the first update rate may be on the order of 1 kHz and the second update rate may be on the order of 10-100 kHz. In some instances, the first phase shifter 532 may be used to make large scale steering corrections of a signal while the second phase shifter 534 may be used for noise or environmental fluctuation correction strategies (e.g., dithering).

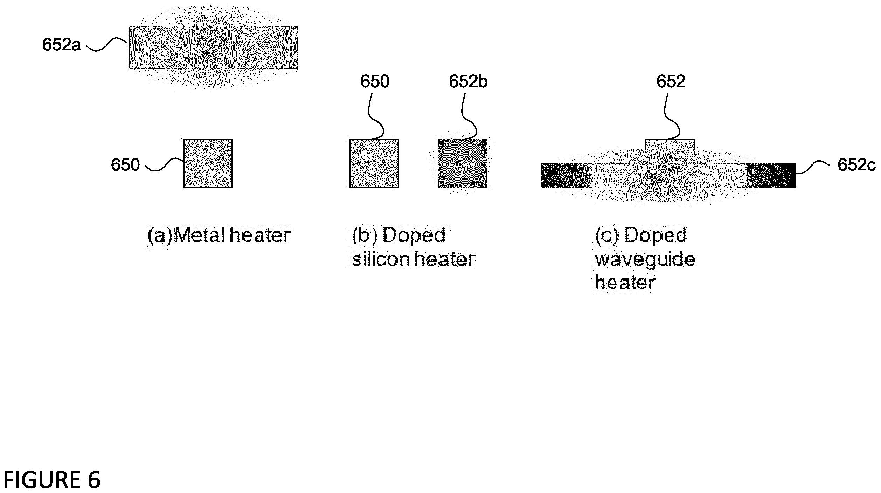

In some instances, the first phase shifter 532 and/or second phase shifter 534 may be a heater type phase shifter such as a thermo-optic phase shifter. The heater type phase shifter may be configured to modulate the frequency of a signal. The heater type phase shifter may include a heating element and a waveguide. The heating element may be configured to heat the portion of the waveguide such that the refractive index is modified. In this regard, a signal passing through the heater type phase shifter may be modulated. FIGURE 6 illustrates several example heater type phase shifters. In one example, the heater element 652a is disposed above a waveguide 650 or portion thereof as shown in example (a) of FIGURE 6. In another example, the heater element 652b is located at the same level as the waveguide 650 or portion thereof as shown in example (b) of FIGURE 6. In this regard, the heater element 652b may be adjacent to the waveguide 650 or portion thereof. In a further example, the heater element 652c is embedded in the waveguide 652 or portion thereof as shown in example (c) of FIGURE 6. In some instances, the heater element 652 may be made of a material such as metal, silicon, etc. Additionally, in some instances, the material may be a doped material.

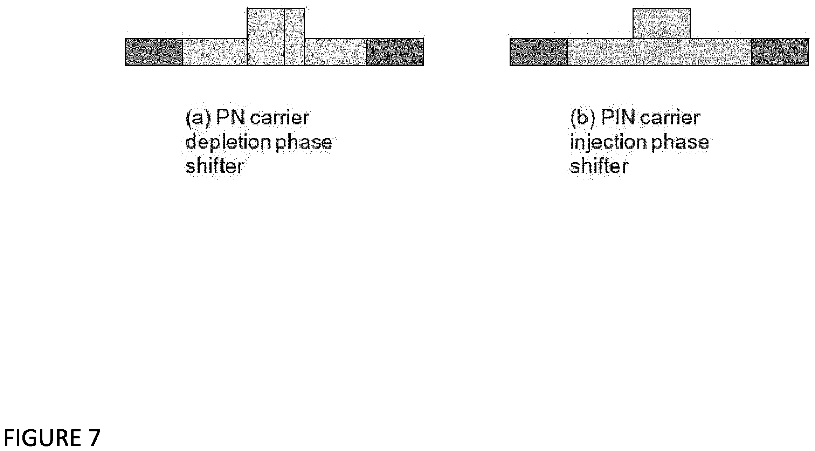

In some instances, the first phase 532 shifter and/or second phase shifter 534 may be a carrier type phase shifter. The carrier type phase shifter may be configured to modify the frequency and amplitude of a signal. FIGURE 7 illustrates several example carrier type phase shifters. In one example, the carrier type phase shifter may be a PN carrier depletion phase shifter operating in reverse bias as shown in example (a) of FIGURE 7. In another example, the carrier type phase shifter may be a PIN carrier injection phase shifter operating in forward bias as shown in example (b) of FIGURE 7. Other junction geometries and doping profiles (vertical, S, U, lateral NPN, etc.) can also be considered for carrier-based modulation.

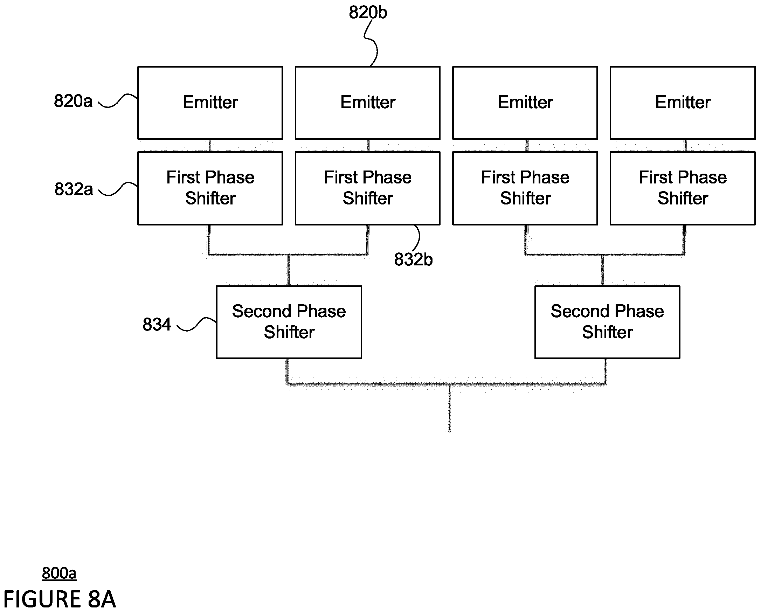

In some instances, phase shifters of the sets of phase shifters associated with different emitters may overlap in part. In this regard, a single phase shifter may be associated with a plurality of emitters. FIGURE 8A illustrates an example 800a of a one second phase shifter to two emitter arrangement. In such an example, each first phase shifter 832a, 532b is associated with a single respective emitter 820a, 820b and each second phase shifter 834 is associated with a pair of emitters 820a, 820b.

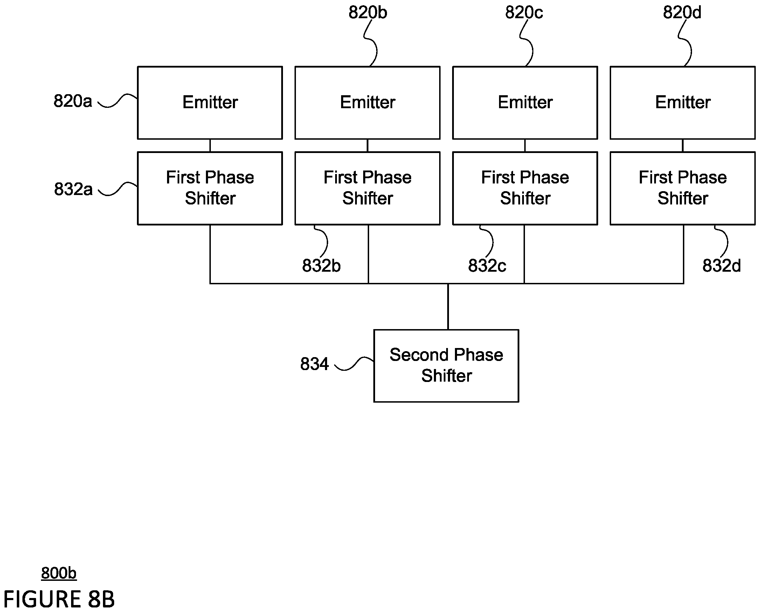

FIGURE 8B illustrates another example 800b of a one second phase shifter to four emitter arrangement. In such an example, each first phase shifter 832a, 532b. 532c, 532d is associated with a single respective emitter 820a, 820b, 820c, 820d and each second phase shifter 834 is associated with four emitters 820a, 820b, 820c, 820d.

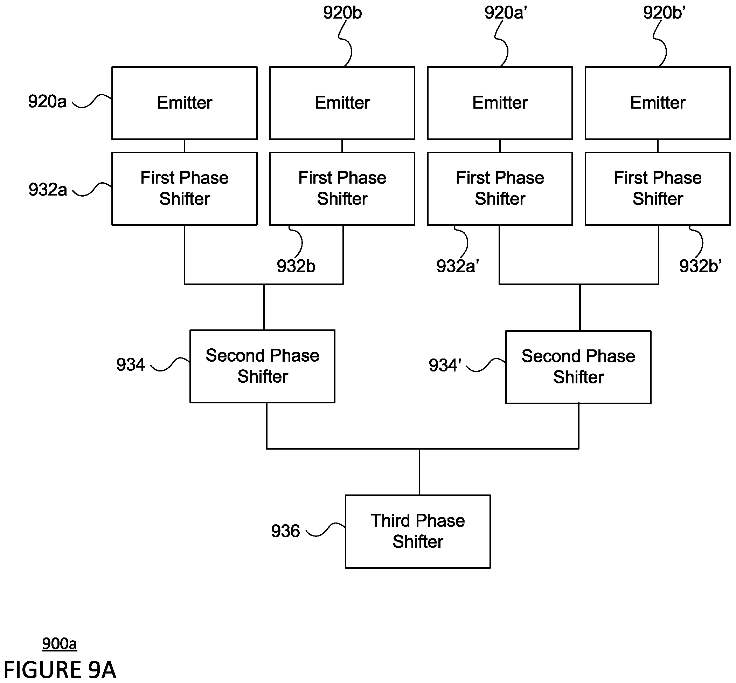

In some instances, each emitter may additionally be associated with a third phase shifter. The third phase shifter may be the same type of phase shifter and/or have the same functionality (e.g., update rate, number of frequencies in the tuning range, steering functionality, noise correction functionality, etc.) as the first or second phase shifter. In some examples, each emitter may be associated with a different third phase shifter. Alternatively, each third phase shifter may be associated with a plurality of emitters. FIGURE 9A illustrates an example 900a where a third phase shifter is associated with four emitters. In such an example, each first phase shifter 932a, 932b, 932a', 932b' is associated with a single respective emitter 920a, 920b, 920a', 920b', each second phase shifter 934, 934' is associated with a respective pair of emitters 920a, 920b, 920a', 920b', and the third phase shifter is associated with four emitters 920a, 920b, 920a', 920b'.

FIGURE 9A illustrates a further example 900b where a third phase shifter is associated with eight emitters. In this regard, . In such an example, each first phase shifter 932a, 932b. 932c, 932d, 932a', 932b', 932c', 932d' is associated with a single respective emitter 920a, 920b, 920c, 920d, 920a', 920b', 920c', 920d', each second phase shifter 934, 934' is associated with four respective emitters 920a, 920b, 920c, 920d, 920a', 920b', 920c', 920d', and the third emitter is associated with eight emitters 920a, 920b, 920c, 920d, 920a', 920b', 920c', 920d'.

While only one third phase shifter is depicted in FIGURES 9A-9B for simplicity and ease of representation, the OPA of the optical communications terminal may include one or more third phase shifters each associated with one or more emitters of the plurality of emitters. Moreover, in some instances, each emitter may be associated with additional phase shifters (e.g., fourth phase shifter(s), fifth phase shifter(s)...N phase shifter(s)).

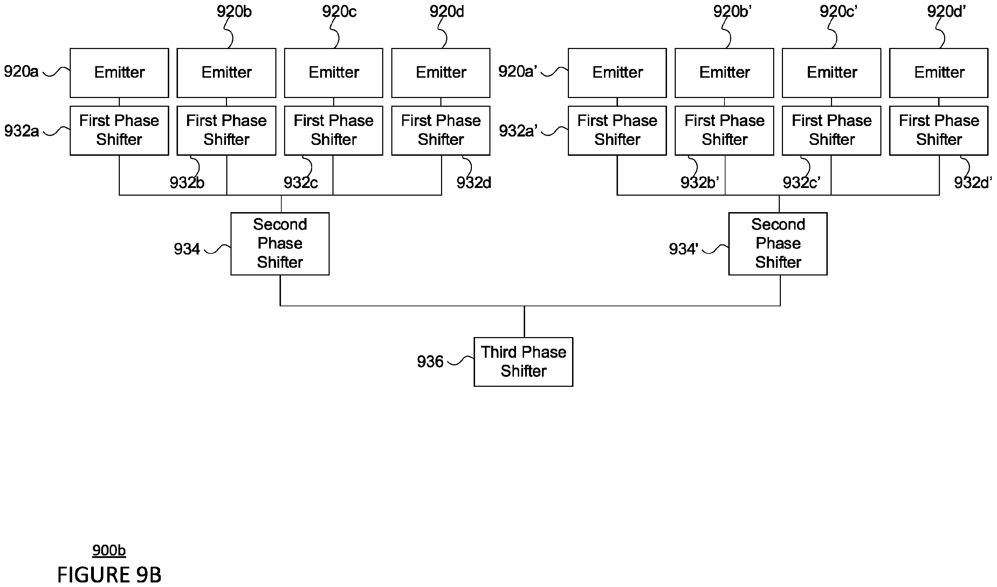

In some instances, the phase shifters may be arranged in N layers. N may be the number of phase shifters associated with each emitter. In this regard, the first phase shifters may be arranged in a first layer, the second phase shifters may be arranged in a second layer, and the third phase shifters may be arranged in a third layer. FIGURES 5, 8A, 8B, 9A, and 9B illustrate the first phase shifters 532, 832, 932, 932' arranged in a first layer and the second phase shifters 534, 834, 934, 934' arranged in a second layer. Additionally, FIGURES 9A and 9B illustrate the third phase shifter 936 arranged in a third layer. In some instances, each layer may include a plurality of phase shifters.

In some instances, each layer of phase shifters may be configured to modulate a signal within a different phase tuning range. Additional layers may allow for smaller phase tuning ranges at each layer. Smaller phase tuning ranges at each layer may allow for more precise signal modulation. In a first example, if the overall tuning range is 2π and there are two layers, the first layer may have a tuning range of 0 to π, and the second layer may have a tuning range of π to 2π. In a second example, if the overall tuning range is 2π and there are three layers, the first layer may have a tuning range of 0 to π, the second layer may have a tuning range of π to 1.5π, and the third layer may have a tuning range of 1.5π to 2π. In this regard, in both examples, the overall tuning range is 2π, but the second example with three layers may allow for more precise signal modulation in the second and third layers as the tuning ranges of the second and third layers are smaller. In some instances, the tuning range at each layer may include a single frequency.

The one or more processors of the optical communications terminal (e.g., one or more processors 104, one or more processors 124) may be configured to drive the phase shifters of the OPA. In some instances, differing phase shifters (e.g., first phase shifter(s) 532, 832, 932, 932', second phase shifter(s) 534, 834, 934, 934', third phase shifter(s) 936) may be driven by differing processors of the one or more processors. In some instances, phase shifters with the same tuning range and/or update rate may be driven by the same processors of the one or more processors. For example, each of the first, second, and third shifters may be driven by a different processor. In another example, when the phase shifters are arranged in N layers, each layer of phase shifters may be driven by a different processor.

### Example Methods

As discussed above, an OPA of an optical communications terminal may be used in a hybrid phase modulation approach. In this regard, the optical communications terminal may be used in a method of modulating a signal transmitted or received at an OPA.

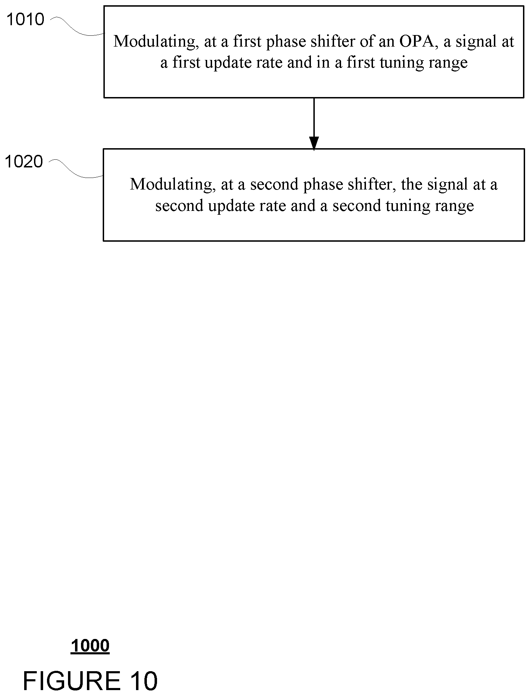

FIGURE 10 illustrates an example method 1000 for modulating a signal transmitted or received at an OPA. At block 1010, the method includes modulating, at a first phase shifter of an OPA, a signal at a first update rate and in a first tuning range. At block 1020, the method further includes modulating, at a second phase shifter, the signal at a second update rate and a second tuning range. The first update rate is different from the second update rate, and the first tuning range is different than the second tuning range. The first phase shifter is associated with an emitter of a plurality of emitters and the second phase shifter is associated with two emitters of the plurality of emitters. In this regard, incoming (received) and outgoing (transmitted) signals may be modulated by the first phase shifter 532, 832, 932, 932' and the second phase shifter 534, 834, 934, 934'. As discussed above, the first phase shifter 532, 832, 932, 932' may have a first phase tuning range and the second phase shifter 534, 834, 934, 934' may have a second phase tuning range. The first phase tuning range may be larger than the second phase tuning range.

Additionally as discussed above, the first update rate may be less than the second update rate. For example, the first update rate may be on the order of 1 kHz and the second update rate may be on the order of 10-100 kHz. In some instances, the first phase shifter 532, 832, 932, 932' may be used to make large scale steering corrections of a signal while the second phase shifter 534, 834, 934, 934' may be used for noise correction and/or correction of environmental fluctuation (e.g., dithering).

Also as discussed above, a first phase shifter 532, 832, 932, 932' may be associated with a single respective emitter 520, 820, 920, 920', while a second phase shifter 534, 834, 934, 934' may be associated with multiple emitters 520, 820, 920, 920' of a plurality emitters (e.g., two, four).

In some instances, when the signal is an incoming signal, the modulation at the first phase shifter may be conducted prior to the modulation at the second phase shifter. In this regard, when receiving a signal at an emitter 520, 820, 920, 920' of the optical communications terminal 102, 122, the signal may be modulated by the first phase shifter 532, 832, 932, 932'. Thereafter, the signal may be further modulated by the second phase shifter 534, 834, 934, 934'.

Alternatively, when the signal is an outgoing signal, the modulation at the second phase shifter may be conducted prior to the modulation at the first phase shifter. In this regard, when transmitting a signal from the optical communication terminal, a signal may be modulated by the second phase shifter 534, 834, 934, 934. Thereafter, the signal may be further modulated by the first phase shifter 532, 832, 932, 932' prior to being transmitted by an emitter 520, 820, 920, 920'.

In some instances, the method may further include modulating, at a third phase shifter of the OPA, the signal at a third update rate and in a third tuning range. In this regard, the third update rate of the third phase shifter (e.g., third phase shifter 936) may be the same or different from the first update rate, and the third update rate may also be the same or different from the second update rate. Additionally, the third tuning range of the third phase shifter 936 may be the same or different from the first and/or second tuning ranges. In some instances, the third tuning range may include the same number of frequencies therein as the first and/or second tuning ranges. In some instances, the third phase shifter 936 may be used for larger scale phase modulation. For example, the third phase shifter 936 may be used to make large scale steering corrections of a signal. Alternatively, the third phase shifter may be used for smaller scale phase modulation. For example, the third phase shifter 936 may be used for noise or environmental fluctuation correction (e.g., dithering).

In some instances, when the signal is an incoming signal, the modulation at the third phase shifter may be conducted following modulation at the first and second phase shifters. In this regard, when receiving a signal at an emitter 520, 820, 920, 920' of the optical communications terminal 102, 122, the signal may be modulated by the first phase shifter 532, 832, 932, 932'. Thereafter, the signal may be further modulated by the second phase shifter 534, 834, 934, 934', and next, the signal may be further modulated by the third phase shifter 936. As discussed above, while only one third phase shifter is depicted in FIGURES 9A-9B for simplicity and ease of representation, the OPA of the optical communications terminal may include one or more third phase shifters each associated with one or more emitters of the plurality of emitters.

Alternatively, when the signal is an outgoing signal, the modulation at the third phase shifter may be conducted prior to the modulation at the first and second phase shifters. In this regard, when transmitting a signal from the optical communication terminal, a signal may be modulated by the third phase shifter 936, then the signal may be further modulated by the second phase shifter 534, 834, 934, 934. Thereafter, the signal may be further modulated by the first phase shifter 532, 832, 932, 932' prior to being transmitted by an emitter 520, 820, 920, 920'.

The features and methodology described herein may provide an optical communications terminal with an OPA using phase shifters with differing tuning ranges and/or update rates. In this regard, the OPA may leverage the advantages of different tuning techniques while minimizing their drawbacks. Another significant advantage of this architecture is the possibility to share phase shifters with different tuning techniques amongst multiple antennas or emitters. The sharing of the phase shifters may reduce system complexity and free area on the PIC for other components, increasing scalability. Cascading shifters can also reduce the driver requirements on each individual shifters, allowing for instance complex modulation patterns to be imprinted using simpler switches at each level.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. An optical communications terminal comprising:
an optical phased array (OPA) comprising:
a plurality of emitters; and
a set of phase shifters including a first phase shifter and a second phase shifter and wherein the first phase shifter and the second phase shifter are arranged such that an incoming signal is modulated by the first phase shifter with a first update rate and a first tuning range and thereafter further modulated by the second phase shifter with a second update rate and a second tuning range, wherein the first update rate is different from the second update rate and the first tuning range is different than the second tuning range,
wherein the first phase shifter is associated with at least one emitter of the plurality of emitters and the second phase shifter is associated with at least two emitters of the plurality of emitters.

2. The optical communications terminal of claim 1, wherein the first phase shifter and the second phase shifter are arranged such that an outgoing signal is modulated by the second phase shifter with the second update rate and the second tuning range and thereafter further modulated by the first phase shifter with the first update rate and first tuning range.

3. The optical communications terminal of claim 1 or claim 2, wherein the second phase shifter is associated with at least four emitters of the plurality of emitters.

4. The optical communications terminal of claim 1, wherein the set of phase shifters further includes a third phase shifter with a third update rate and third tuning range.

5. The optical communications terminal of claim 4, wherein the second tuning range is the same as the third tuning range.

6. The optical communications terminal of claim 4 or claim 5, wherein the second update rate is the same as the third update rate.

7. The optical communications terminal of any of claims 4 to 6, wherein the first phase shifter, the second phase shifter, and the third phase shifter are arranged such that an outgoing signal is modulated by the third phase shifter with the third update rate and the third tuning range, then further modulated by the second phase shifter with the second update rate and the second tuning range, and thereafter further modulated by the first phase shifter with the first update rate and first tuning range.

8. The optical communications terminal of any of claims 4 to 6, wherein the first phase shifter, the second phase shifter, and third phase shifter are arranged such that an incoming signal is modulated by the first phase shifter with a first update rate and a first tuning range, then further modulated by the second phase shifter with a second update rate and a second tuning range, and thereafter further modulated by the third phase shifter with the third update rate and the third tuning range.

9. The optical communications terminal of any preceding claim, wherein the set of phase shifters is a plurality of sets of phase shifters each including a first phase shifter associated with at least one respective emitter of the second phase shifter associated with at least two respective emitters of the plurality of emitters, and optionally wherein the first phase shifters of the plurality of sets of phase shifters are arranged in a first layer and the second phase shifters of the plurality of sets of phase shifters are arranged in a second layer.

10. The optical communications terminal of any preceding claim, wherein:
the first tuning range is greater than 2π and the first update rate is on the order of 1 kHz, and /or
the second tuning range is less than π and the second update rate is on the order of 10 kHz or 100 kHz, and/or
the first phase shifter is a thermo-optic phase shifter, and/or
the second phase shifter is a carrier type phase shifter.

11. A method of modulating signals at an optical phased array (OPA) of an optical communications terminal, the method comprising:
modulating, at a first phase shifter of an OPA, a signal at a first update rate and in a first tuning range; and
modulating, at a second phase shifter of the OPA, the signal at a second update rate and a second tuning range, wherein the first update rate is different from the second update rate and the first tuning range is different than the second tuning range,
wherein the first phase shifter is associated with at least one emitter of a plurality of emitters and the second phase shifter is associated with at least two emitters of the plurality of emitters.

12. The method of modulating signals of claim 11, wherein the modulation at the first phase shifter of the OPA is conducted prior to the modulation at the second phase shifter of the OPA when the signal is an incoming signal.

13. The method of modulating signals of claim 11 or claim 12, wherein the modulation at the second phase shifter of the OPA is conducted prior to the modulation at the first phase shifter of the OPA when the signal is an outgoing signal.

14. The method of modulating signals of claim 13, further comprising modulating, at a third phase shifter of the OPA, the signal at a third update rate and in a third tuning range.

15. The method of modulating signals of claim 14, wherein:
the modulation at the third phase shifter is conducted following the modulation at the first and second phase shifters of the OPA when the signal is an incoming signal, and/or
the second update rate is the same as the third update rate.
